# EUROPEAN PATENT APPLICATION

(11) **EP 3 970 830 A1**
(43) Date of publication of application: **23.03.2022**
(21) Application number: 20805769.5
(22) Date of filing: 11.05.2020
(51) Int. Cl.: B01D 39/16, A61L 9/16

(54) **FILTER MATERIAL FOR FILTER, AND FILTER**

(30) Priority: 13.05.2019 JP 2019090526; 13.05.2019 JP 2019090527
(71) Applicant: TOYOBO CO., LTD., Osaka-shi Osaka 530-8230 (JP)
(72) Inventor: TAKAMI, Kento, Otsu-shi, Shiga 520-0292 (JP)
(74) Representative: Vossius & Partner Patentanwälte Rechtsanwälte mbB
(86) International application number: PCT/JP2020/018839
(87) International publication number: WO 2020/230760

(57) **Abstract**

The filter medium for a filter of the present invention has a laminate structure in which a long-fiber non-woven fabric and a wet non-woven fabric are stacked, wherein the wet non-woven fabric comprises vinylon, polyester, and polyvinyl alcohol, is disposed on a most upstream side of air flow, has a surface located on the most upstream side of air flow, the surface having a surface roughness (SMD) not larger than 2.7 µm, and has a surface stacked on the long-fiber non-woven fabric, the surface having (a) a surface roughness (SMD) not smaller than 3.0 µm or (b) a rough texture (MMD) not lower than 0.02.

## Description

### TECHNICAL FIELD

The present invention relates to a filter medium for a filter and a filter.

### BACKGROUND ART

In recent years, regarding filters for air conditioning, air conditioners, automobiles, and the like, demand for filter mediums to have higher performance and to be lower in cost has increased, and many studies have been conducted for filter mediums for filters that achieve both dust removal performance and deodorization performance (see, for example, Patent Literatures 1 to 3). For even higher functionality, demand for filters that enable easy removal of a foreign object having adhered thereto once has also increased.

### PRIOR ART DOCUMENT

### PATENT DOCUMENTS

[PTL 1] Japanese Laid-Open Patent Publication No. H11-5058
[PTL 2] Japanese Laid-Open Patent Publication No. H3-98642
[PTL 3] Japanese Laid-Open Patent Publication No. 2001-218824

### SUMMARY OF THE INVENTION

### PROBLEMS TO BE SOLVED BY THE INVENTION

However, it is difficult to remove, during cleaning, a foreign object adhered to a filter medium for a filter used for air cleaning, a cleaner, or the like. Further, it is difficult to achieve both of removal of the adhered foreign object and improvement in bonding strength after the filter medium is made as a sheet through stacking.

Thus, the present invention has been made in view of the above problems, and an object of the present invention is to provide: a filter medium for a filter that enables easy removal of a foreign object having adhered thereto and that has an excellent bonding strength after being made as a sheet through stacking; and the like.

### SOLUTIONS TO THE PROBLEMS

The present inventor conducted earnest studies and found that the above-described problems can be solved with means described below. Accordingly, the present inventors arrived at the present invention. Specifically, the present invention is as follows.
(1) A filter medium for a filter, the filter medium having a laminate structure in which a long-fiber non-woven fabric and a wet non-woven fabric are stacked, wherein the wet non-woven fabric comprises vinylon, polyester, and polyvinyl alcohol, is disposed on a most upstream side of air flow, has a surface located on the most upstream side of air flow, the surface having a surface roughness (SMD) of not larger than 2.7 µm, and has a surface stacked on the long-fiber non-woven fabric, the surface having (a) a surface roughness (SMD) of not smaller than 3.0 µm or (b) a rough texture (MMD) of not lower than 0.02.
(2) The filter medium for a filter according to the above (1), wherein the wet non-woven fabric contains 10 to 20% by weight of the polyvinyl alcohol.
(3) The filter medium for a filter according to the above (1) or (2), wherein the wet non-woven fabric comprises a fiber having a fiber length of not larger than 30 mm.
(4) The filter medium for a filter according to any one of the above (1) to (3), wherein the wet non-woven fabric contains 0.001 to 0.1% by weight of polyacrylic acid ester.
(5) The filter medium for a filter according to any one of the above (1) to (4), wherein the long-fiber non-woven fabric is a spunbonded non-woven fabric.
(6) The filter medium for a filter according to any one of the above (1) to (5), wherein an adsorbent is held between the long-fiber non-woven fabric and the wet non-woven fabric.
(7) The filter medium for a filter according to any one of the above (1) to (6), wherein a peel strength between layers which are the long-fiber non-woven fabric and the wet non-woven fabric, is not lower than 0.5 mN.
(8) A filter in which the filter medium for a filter according to any one of the above (1) to (7) is used.

### ADVANTAGEOUS EFFECTS OF THE INVENTION

The surface, of the filter medium for a filter of the present invention, that is located on the most upstream side of air flow, has a surface roughness (SMD) not larger than 2.7 µm and is even. Thus, the filter medium enables easy removal of a foreign object thereon. Therefore, it is possible to facilitate cleaning of the filter in which the filter medium for a filter of the present invention is used. In addition, the surface of the wet non-woven fabric, that is stacked on the long-fiber non-woven fabric, has (a) a surface roughness (SMD) not smaller than 3.0 µm or (b) a rough texture (MMD) not lower than 0.02. Thus, after the wet non-woven fabric and the long-fiber non-woven fabric are stacked and made into a sheet, the filter medium has excellent bonding strength between both fabrics and has excellent durability.

### MODE FOR CARRYING OUT THE INVENTION

Hereinafter, an embodiment of the present invention will be described in detail.

A filter medium of the present embodiment has a laminate structure in which a long-fiber non-woven fabric and a wet non-woven fabric are stacked, wherein the wet non-woven fabric (1) comprises vinylon, polyester, and polyvinyl alcohol, (2) is disposed on a most upstream side of air flow, (3) has a surface located on the most upstream side of air flow, the surface having a surface roughness (SMD) of not larger than 2.7 µm, and (4) has a surface stacked on the long-fiber non-woven fabric, the surface having (a) a surface roughness (SMD) of not smaller than 3.0 µm or (b) a rough texture (MMD) of not lower than 0.02. The long-fiber non-woven fabric is disposed on the downstream side of the wet non-woven fabric.

In the present specification, the surface roughness refers to the value of SMD indicative of an average deviation from data of surface irregularity measured in an assessment using a friction tester (KES-SE) manufactured by KATO TECH CO., LTD. A larger value of the SMD indicates that the surface is rougher and more irregular. In addition, in the present specification, the rough texture is a value indicating the degree of variation in surface friction coefficient, i.e., a friction coefficient variation (MMD), detected in an evaluation with a friction tester (KES-SE) manufactured by KATO TECH CO., LTD.

In the filter medium of the present embodiment, the surface located on the extreme upstream side of air flow has a surface roughness (SMD) of not larger than 2.7 µm. If the surface roughness is larger than 2.7 µm, a foreign object having adhered to the filter medium is difficult to remove owing to the irregularity of the surface.

In the wet non-woven fabric of the present embodiment, the surface that is stacked on the long-fiber non-woven fabric, has a surface roughness not smaller than 3.0. If the surface roughness is smaller than 3.0, the adhesiveness with the long-fiber non-woven fabric deteriorates. Alternatively, the surface, of the wet non-woven fabric of the present embodiment, that is stacked on the long-fiber non-woven fabric, has a rough texture (MMD) not lower than 0.02. If the rough texture (MMD) is lower than 0.02, the adhesiveness with the long-fiber non-woven fabric deteriorates. If the adhesiveness deteriorates, wrinkles may be generated when the wet non-woven fabric and the long-fiber non-woven fabric are stacked. In this case, if particulates of activated carbon or the like are held between the fabrics as described later, the particulates fall off from top portions or the like of the wrinkles. Consequently, the portions of the product that have no activated carbon stand out in terms of appearance, and the quality of the product deteriorates.

A fiber structure forming the wet non-woven fabric of the present embodiment is formed from, as materials, vinylon, polyester, and polyvinyl alcohol. Here, the fiber structure preferably contains 10 to 20% by weight of the polyvinyl alcohol. If the polyvinyl alcohol content is lower than 10%, the bending strength of the wet non-woven fabric is weak, and further, surface smoothness is less likely to be obtained. Meanwhile, if the polyvinyl alcohol content is higher than 20% by weight, air-flow resistance increases.

The wet non-woven fabric of the present embodiment preferably contains 0.001 to 0.1% by weight of polyacrylic acid ester. If the polyacrylic acid ester content is lower than 0.001%, the surface smoothness and surface slipperiness are not improved. Meanwhile, if the polyacrylic acid ester content is higher than 0.1% by weight, the air-flow resistance increases.

The materials of the fiber structure forming the wet non-woven fabric of the present embodiment are not particularly limited, and materials such as a polyolefin-based resin, a polyester-based resin, a cellulose-based resin, a polyamide-based resin, a polyurethane-based resin, an acrylic-based resin, a polyvinyl alcohol-based resin, and a polycarbonate-based resin, can be used.

The orientation of fibers in the wet non-woven fabric of the present embodiment is not particularly limited, and, for example, the fibers may be oriented in any of a random pattern, a crossing pattern, or a parallel pattern as long as a non-woven fabric form is obtained.

The average diameter of fibers forming the wet non-woven fabric of the present embodiment is preferably 1 to 100 µm and more preferably 5 to 50 µm. If the average diameter of the constituent fibers is smaller than 1 µm, gaps between the fibers are also narrowed. Accordingly, dust in the air accumulates on a cover layer, whereby the air-flow resistance rapidly increases. Meanwhile, if the average diameter of the constituent fibers is larger than 100 µm, a foreign object is difficult to remove.

The length of each of the fibers forming the wet non-woven fabric of the present embodiment is preferably not longer than 30 mm. If the length of each of the fibers is longer than 30 mm, the fibers become more likely to be oriented in the thickness direction, whereby the surface roughness increases.

The weight per unit area of the wet non-woven fabric of the present embodiment is preferably 10 to 100 g/m² and more preferably 20 to 80 g/m². If the weight per unit area is lower than 10 g/m², the contexture deteriorates. Meanwhile, if the weight per unit area is higher than 100 g/m², the thickness of the sheet becomes large, and the structural resistance increases at the time of pleating when the wet non-woven fabric is used for a filter.

The wet non-woven fabric of the present embodiment can be produced with a known paper-making machine by a known wet paper-making method.

The long-fiber non-woven fabric of the present embodiment is a sheet-like fabric that is formed of fibers such as polyolefin-based fibers, polyester-based fibers, polyamide-based fibers, or polyurethane-based fibers. The long-fiber non-woven fabric is preferably formed of polyester-based fibers. With polyester-based fibers, because of a relatively high rigidity thereof, the strength of the filter medium increases, and it becomes easy to perform pleating. A production method for the long-fiber non-woven fabric is preferably a spunbond method.

The weight per unit area of the long-fiber non-woven fabric of the present embodiment is preferably 5 to 100 g/m² and more preferably 10 to 80 g/m². If the weight per unit area is lower than 5 g/m², the rigidity decreases. Meanwhile, if the weight per unit area is higher than 100 g/m², the following drawbacks occur. That is, in association with increase in the number of fibers, pressure loss increases, and moreover, powder dust retaining spaces between the fibers become less, whereby the amount of powder dust to be retained decreases.

The diameter of each of the fibers forming the long-fiber non-woven fabric of the present embodiment is preferably 3 to 100 µm, more preferably 5 to 80 µm, and further preferably 10 to 60 µm. If the diameter falls within this range, it is possible to prevent increase in pressure loss and obtain a sufficient rigidity.

The orientation of the fibers in the long-fiber non-woven fabric of the present embodiment is not particularly limited, and, for example, the fibers may be oriented randomly, in a crossing manner, or parallelly as long as a non-woven fabric form is obtained.

The thickness of the filter medium of the present embodiment is preferably 0.1 to 3.0 mm. If the thickness is smaller than 0.1 mm, the contexture deteriorates. Meanwhile, if the thickness is larger than 3.0 mm, the thickness of the entire filter medium becomes excessively large, and the structural resistance increases if the filter is formed in a pleated manner. As a result, the air-flow resistance of the entire filter becomes excessively high, and a problem arises in practical use.

In the filter medium of the present embodiment, a granular adsorbent and a binding material (binder) may be held between the long-fiber non-woven fabric and the wet non-woven fabric.

The binder to be held therebetween is preferably formed of a thermoplastic resin, and examples of the thermoplastic resin include polyolefin-based resins, polyamide-based resins, polyester-based resins, ethylene-acrylic copolymer resins, and the like. Although the components of the binder are not particularly limited, polyolefin-based resins or polyester-based resins are preferable. The reason is as follows. A base material layer (the long-fiber non-woven fabric or the wet non-woven fabric) and the binder are firmly bound to each other at the boundary surface therebetween, whereby a high peel strength is obtained.

The thermoplastic resin used for the binder of the filter medium of the present embodiment preferably has, in powder form (granular form), a size of 100 to 400 µm in terms of the average particle diameter. If the average particle diameter of the granular thermoplastic resin (granular binder) is smaller than 100 µm, adhesion force is exerted between the granular adsorbent and the thermoplastic resin owing to the van der Waals force and electrostatic force. Accordingly, the thermoplastic resin cannot actively come into contact with the base material layer, whereby a sufficient peel strength is not obtained. Meanwhile, if the average particle diameter is larger than 400 µm, the thickness of the filter medium becomes large, and the structural resistance of a filter produced by using the binder increases. Thus, an average particle diameter larger than 400 µm is not preferable for practical use.

The granular binder used for the filter medium of the present embodiment is preferably used in a proportion of 10 to 80% by weight to the granular adsorbent, and more preferably used in a proportion of 20 to 60% by weight to the granular adsorbent. The reason is as follows. That is, if the proportion falls within this range, a filter medium that is excellent in adhesive force with the base material layer, pressure loss, and deodorization performance is obtained.

As the granular adsorbent of the filter medium of the present embodiment, an organic porous body represented by a styrene-divinylbenzene crosslinked product can be used besides an inorganic substance such as activated carbon, silica gel, zeolite, or sepiolite. In particular, activated carbon or silica gel is preferable because a specific surface area thereof is very large.

In the case where activated carbon is used as the granular adsorbent, for example, a coconut husk-based activated carbon, a wood-based activated carbon, a coal-based activated carbon, a pitch-based activated carbon, and the like are preferable. The number of introduction pores to the inside that can be seen by surface observation, i.e., so-called macropores, is preferably large. If the number of macropores is large, even when the surface of the activated carbon is coated with the binder at the time of producing a granule mixture from the activated carbon and the granular binder, pores capable of adsorption can be opened by gas desorption from inside the pores at the time of hot pressing. In addition, if the surface of the activated carbon is rough to some extent, the fluidity of the binder resin that has melted also deteriorates, whereby adsorption performance can be inhibited from decreasing.

In the filter medium of the present embodiment, chemical treatment may be performed on the granular adsorbent for the purpose of improving adsorption performance for polar substances or aldehydes. In the case where the substance to be adsorbed is aldehyde-based gas or an acidic polar substance such as a nitrogen compound such as NOx, a sulfur compound such as SOx, or acetic acid, examples of the chemical to be used for the chemical treatment include amine-based chemical agents such as ethanolamine, polyethyleneimine, aniline, p-anisidine, sulfanilic acid, tetrahydro-1,4-oxazine, and hydrazide compounds. Among the amine-based chemical agents, tetrahydro-1,4-oxazine is preferable. Since tetrahydro-1,4-oxazine can be relatively easily acquired and easily dissolved in water, loading treatment can be easily performed. Apart from the amine-based chemical agents, the following chemicals are suitably used: sodium hydroxide, potassium hydroxide, guanidine carbonate, guanidine phosphate, aminoguanidine sulfate, 5,5-dimethylhydantoin, benzoguanamine, 2,2-iminodiethanol, 2,2,2-nitrotriethanol, ethanolamine hydrochloride, 2-amino ethanol, 2,2-iminodiethanol hydrochloride, p-aminobenzoic acid, sodium sulfanilate, L-arginine, methylamine hydrochloride, semicarbazide hydrochloride, hydrazine, hydroquinone, hydroxylamine sulfate, permanganate, potassium carbonate, potassium hydrogencarbonate, and the like. In the case where the substance to be adsorbed is a basic polar substance such as ammonia, methylamine, trimethylamine, or pyridine, for example, phosphoric acid, citric acid, malic acid, ascorbic acid, tartaric acid, and the like are suitably used. An adsorbent treated with any of these chemicals may be used solely or used by being mixed with an adsorbent that is not subjected to chemical treatment.

The chemical treatment is performed by, for example, causing the chemical to be supported or loaded on the adsorbent. It is also possible to perform, instead of directly treating the adsorbent with the chemical, a method that involves loading treatment around the surface of the filter medium through an ordinary coating process or the like, or loading by impregnating the entire filter medium with the chemical. In this case, it is also possible to perform a method in which: a chemical aqueous solution mixed with a thickener such as sodium alginate or polyethylene oxide is prepared; and the chemical aqueous solution is subjected to supporting and loading. This method is effective in: supporting and loading a chemical having a low solubility into water; and further, inhibiting the chemical from being separated.

The filter medium of the present embodiment may be formed so as to contain, for example, components having additional functions such as an antibacterial agent, an antifungal agent, an antivirus agent, and a flame retardant. These components may be kneaded in the non-woven fabric or fibers or the like forming the base material layer, or may be added by loading and supporting the components in subsequent processing. If, for example, the filter medium is formed so as to contain a flame retardant, a filter medium that conforms to the UL flame retardance standards and the criteria on flame retardance stipulated in FMVSS.302 can be produced.

A filter of the present embodiment in which the filter medium of the present embodiment is used is also included in the present invention. The filter of the present embodiment may be subjected to, for example, pleating or attaching processing to a frame or the like. In addition, the filter of the present embodiment may be formed by combining another material with the filter medium of the present embodiment.

### EXAMPLES

Hereinafter, the present invention will be more specifically described by means of examples. The properties shown in the examples and comparative examples in the following sections were measured using the following method. However, the present invention is not limited to the examples.

### (Pressure Loss)

A filter medium is placed in a duct, and air is caused to flow through the filter medium at an air filtering speed of 50 cm/second. Then, a differential pressure gauge is read to obtain the difference in static pressure between the upstream side and the downstream side of the filter medium, whereby a pressure loss (Pa) is measured.

### (Peel Strength)

An average peel strength between a long-fiber non-woven fabric and a wet non-woven fabric is measured. A test is performed at a tensile strength of 100 mm/minute on a test piece of a filter medium, the size of which is such that the width is 50 mm and the length is 200 mm.

### (Rigidity)

A bending resistance in a machine direction is measured according to Method A (Gurley method) of JIS L-1096.

### (Surface Irregularity)

Evaluation is conducted by using a friction tester (KES-SE) manufactured by KATO TECH CO., LTD. Each sample (non-woven fabric) fixed to a table is scanned with a contact piece while applying a load of 10 gf at a speed of 1 mm/s. Then, an average deviation from data of detected surface irregularities is regarded as the value of surface roughness (SMD).

### (Rough Texture)

An evaluation is conducted with a friction tester (KES-SE) manufactured by KATO TECH CO., LTD. A non-woven fabric sheet fixed to a table is scanned with a contact piece at a speed of 1 mm/second while a load of 10 gf is being applied. The detected degree of variation in surface friction coefficient (friction coefficient variation) is regarded as a rough texture (MMD).

### (Foreign Object Removal Performance)

A filter medium is cut to obtain a sample having a size of a 15 cm-square, JIS15-type powder dust is caused to fall on the sample at 5 m³/minute, and the falling is stopped at the time when the air-flow resistance of the sample has increased by 50 Pa from a base value. The amount of powder dust caught by the sample is evaluated in terms of weight. Then, the 15 cm-square sample is set on a jig perpendicularly to a table and caused to fall off from a height of 10 cm ten times. Lastly, the weight of the sample is measured, and the weight of powder dust that has fallen off from the sample is ascertained. If the weight of the powder dust that has fallen off from the sample is 70% of the adhesion amount, the foreign object removal performance is determined to be good (o).

### [Example 1]

Vinylon fibers (17 dtex, average fiber length: 12 mm, average fiber diameter: 40 µm), vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 26:31.25:5.25:11.25:11.25:15. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 1 having a weight per unit area of 40 g/m² and a thickness of 0.3 mm.

### [Example 2]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 51:7.6:16.2:16.2:9. Furthermore, a polyacrylic acid ester was added while measurement was performed such that the proportion of the weight of the polyacrylic acid ester was 0.05% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 2 having a weight per unit area of 30 g/m² and a thickness of 0.2 mm.

### [Example 3]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 45:7.6:16.2:16.2:15. Furthermore, a polyacrylic acid ester was added while measurement was performed such that the proportion of the weight of the polyacrylic acid ester was 0.05% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 3 having a weight per unit area of 30 g/m² and a thickness of 0.2 mm.

### [Example 4]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 39:7.6:16.2:16.2:21. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 4 having a weight per unit area of 30 g/m² and a thickness of 0.2 mm.

### [Example 5]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 45:7.6:16.2:16.2:15. Furthermore, a polyacrylic acid ester was added while measurement was performed such that the proportion of the weight of the polyacrylic acid ester was 0.15% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 5 having a weight per unit area of 30 g/m² and a thickness of 0.2 mm.

From the wet non-woven fabrics for Examples 1 to 5 described above, filter mediums for Examples 1 to 5 were produced as follows. That is, a mixed powder in which the weight ratio between a coconut husk activated carbon having an average particle diameter of 200 µm and a polyolefin-based thermoplastic resin having an average particle diameter of 200 µm was 1:0.5, was dispersed on the downstream side of each wet non-woven fabric so as to obtain a weight per unit area of 90 g/m². Furthermore, a polyester-based long-fiber non-woven fabric having a weight per unit area of 20 g/m² was superposed on the mixed powder. This laminate was subjected to heating processing at 140°C to be made into a sheet, thereby producing the corresponding filter medium. The above evaluations were conducted on each of the filter mediums for Examples 1 to 5 produced in this manner, with the wet non-woven fabric side being oriented at the upstream side of air flow and with the long-fiber non-woven fabric side being oriented at the downstream side of air flow. The results of the evaluations are indicated in Table 1 of a paragraph described later.

### [Comparative Example 1]

Low-melting polyester fibers (22 dtex, average fiber length: 64 mm, average fiber diameter: 45 µm), low-melting polyester fibers (4.4 dtex, average fiber length: 51 mm, average fiber diameter: 20 µm), and regular polyester fibers (17 dtex, average fiber length: 51 mm, average fiber diameter: 40 µm) were mixed together at a weight ratio of 5:3:2. Then, by thermal bonding the mixed fibers, and as a result, obtaining a thermally bonded non-woven fabric for Comparative Example 1 having a weight per unit area of 65 g/m² and a thickness of 0.2 mm.

### [Comparative Example 2]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 51:7.6:16.2:16.2:9. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Comparative Example 2 having a weight per unit area of 30 g/m² and a thickness of 0.2 mm.

### [Comparative Example 3]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 45:7.6:16.2:16.2:15. Furthermore, a polyacrylic acid ester was added while measurement was performed such that the proportion of the weight of the polyacrylic acid ester was 0.0009% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Comparative Example 3 having a weight per unit area of 30 g/m² and a thickness of 0.2 mm.

From the thermally bonded non-woven fabric for Comparative Example 1 and the wet non-woven fabrics for Comparative Examples 1 and 2, filter mediums for Comparative Examples 1 to 3 were produced as follows. That is, a mixed powder in which the weight ratio between a coconut husk activated carbon having an average particle diameter of 200 µm and a polyolefin-based thermoplastic resin having an average particle diameter of 200 µm was 1:0.5, was dispersed on the downstream side of the thermally bonded non-woven fabric or each wet non-woven fabric so as to obtain a weight per unit area of 90 g/m². Furthermore, the same polyester-based long-fiber non-woven fabric having a weight per unit area of 20 g/m² as that for Example 1 was superposed on the mixed powder. This laminate was subjected to heating processing at 140°C to be made into a sheet, thereby producing the corresponding one of the filter mediums for Comparative Examples 1 to 3. The above evaluations were conducted on each of the filter mediums for Comparative Examples 1 to 3 produced in this manner. On the filter medium for Comparative Example 1, the evaluations were conducted with the thermally bonded non-woven fabric side being oriented at the upstream side of air flow and with the long-fiber non-woven fabric side being oriented at the downstream side of air flow. On each of the filter mediums for Comparative Examples 2 and 3, the evaluations were conducted with the wet non-woven fabric side being oriented at the upstream side of air flow and with the long-fiber non-woven fabric side being oriented at the downstream side of air flow. The results of the evaluations are indicated in Table 1.

**[Table 1]**

| Item | | Example 1 | Example 2 | Example 3 | Example 4 | Example 5 | Comparative Example 1 | Comparative Example 2 | Comparative Example 3 |
|---|---|---|---|---|---|---|---|---|---|
| Wet non-woven fabric | Material | Vinylon, Polyester, PVA | Vinylon, Polyester, PVA | Vinylon, Polyester, PVA | Vinylon, Polyester, PVA | Vinylon, Polyester, PVA | Polyester | Vinylon, Polyester, PVA | Vinylon, Polyester, PVA |
| | Production method | wet paper-making | wet paper-making | wet paper-making | wet paper-making | wet paper-making | thermal bonding | wet paper-making | wet paper-making |
| | Weight per unit area (g/m²) | 30 | 30 | 30 | 30 | 30 | 65 | 30 | 30 |
| | Surface roughness SMD (upstream-side surface) (µm) | 2.4 | 2.5 | 1.5 | 2.3 | 2.5 | 4.3 | 4.1 | 3.1 |
| | Surface roughness SMD (stacked surface) (µm) | 3.4 | 3.2 | 3.4 | 3.5 | 3.4 | 2.5 | 2.7 | 2.6 |
| | Rough texture MMD (stacked surface) | 0.03 | 0.035 | 0.028 | 0.032 | 0.031 | 0.015 | 0.011 | 0.013 |
| | Polyacrylic acid ester content (%) | - | 0.05 | 0.05 | - | 0.15 | | - | 0.0009 |
| Intermediate layer | Particle diameter of particulate activated carbon or silica gel (µm) | 200 | 200 | 200 | 200 | 200 | 200 | 200 | 200 |
| | Particle diameter of particulate binder resin (µm) | 200 | 200 | 200 | 200 | 200 | 200 | 200 | 200 |
| | Material of particulate binder resin | EVA | EVA | EVA | EVA | EVA | EVA | EVA | EVA |
| Long-fiber non-woven fabric | Material | Polypropylene | Polypropylene | Polypropylene | Polypropylene | Polypropylene | Polypropylene | Polypropylene | Polypropylene |
| | Production method | melt blowing | melt blowing | melt blowing | melt blowing | melt blowing | melt blowing | melt blowing | melt blowing |
| | Weight per unit area (g/m²) | 15 | 15 | 15 | 15 | 15 | 15 | 15 | 15 |
| Filter medium performance | Pressure loss (Pa) | 38 | 36 | 40 | 39 | 39 | 41 | 39 | 40 |
| | Peel strength (N) | 0.9 | 1 | 1.5 | 0.5 | 0.6 | 0.1 | 0.3 | 0.2 |
| | Rigidity (in machine direction) (mg) | 645 | 601 | 632 | 643 | 639 | 438 | 602 | 630 |
| Foreign object removal performance | | ○ | ○ | ○ | ○ | ○ | × | × | × |
| Appearance quality | | ○ | ○ | ○ | ○ | ○ | × | × | × |

From Table 1, the following findings are obtained. That is, in each of Examples 1 to 5, the surface roughness (SMD) of the surface located on the most upstream side of air flow is not larger than 2.7 µm, and thus Examples 1 to 5 are more excellent in terms of foreign object removal than Comparative Examples 1 to 3. In addition, in each of Examples 1 to 5, the surface roughness (SMD) of the surface, of the wet non-woven fabric, that is stacked on the long-fiber non-woven fabric is not smaller than 3.0 µm, and thus Examples 1 to 5 have higher peel strengths and more excellent bonding strengths after being made as sheets through stacking, than Comparative Examples 1 to 3. In addition, in each of Examples 1 to 5, the rough texture (MMD) of the surface, of the wet non-woven fabric, that is stacked on the long-fiber non-woven fabric is not lower than 0.02, and thus Examples 1 to 5 have higher peel strengths and more excellent handleability at the time of being made as sheets through stacking, than Comparative Examples 1 to 3.

### INDUSTRIAL APPLICABILITY

The filter medium for a filter of the present invention is excellent in terms of removal of a foreign object adhered to the filter after being used, and is industrially highly useful. For example, the filter medium can be used in a broad range of fields such as the fields of automobiles, air cleaners, air conditioners, copying machines, printers, multi-functional OA devices, and deodorizers for toilets, and can greatly contribute to the industries.

## Claims

1. A filter medium for a filter, the filter medium having a laminate structure in which a long-fiber non-woven fabric and a wet non-woven fabric are stacked, wherein
the wet non-woven fabric
comprises vinylon, polyester, and polyvinyl alcohol,
is disposed on a most upstream side of air flow,
has a surface located on the most upstream side of air flow, the surface having a surface roughness (SMD) of not larger than 2.7 µm, and
has a surface stacked on the long-fiber non-woven fabric, the surface having (a) a surface roughness (SMD) of not smaller than 3.0 µm or (b) a rough texture (MMD) of not lower than 0.02.

2. The filter medium for a filter according to claim 1, wherein
the wet non-woven fabric contains 10 to 20% by weight of the polyvinyl alcohol.

3. The filter medium for a filter according to claim 1 or 2, wherein
the wet non-woven fabric comprises a fiber having a fiber length of not larger than 30 mm.

4. The filter medium for a filter according to any one of claims 1 to 3, wherein
the wet non-woven fabric contains 0.001 to 0.1% by weight of polyacrylic acid ester.

5. The filter medium for a filter according to any one of claims 1 to 4, wherein
the long-fiber non-woven fabric is a spunbonded non-woven fabric.

6. The filter medium for a filter according to any one of claims 1 to 5, wherein
an adsorbent is held between the long-fiber non-woven fabric and the wet non-woven fabric.

7. The filter medium for a filter according to any one of claims 1 to 6, wherein
a peel strength between layers which are the long-fiber non-woven fabric and the wet non-woven fabric, is not lower than 0.5 mN.

8. A filter in which the filter medium for a filter according to any one of claims 1 to 7 is used.
